# EUROPEAN PATENT APPLICATION

(11) **EP 2 050 990 A1**
(43) Date of publication of application: **22.04.2009**
(21) Application number: 08017680.3
(22) Date of filing: 09.10.2008
(51) Int. Cl.: F16J 15/06, F16J 15/08

(54) **Gasket**

(30) Priority: 16.10.2007 JP 2007269078
(71) Applicant: Carl Freudenberg KG, 69469 Weinheim (DE)
(72) Inventor: Matsumoto, Tomohisa, Nihonmatsu-shi Fukushima 964-8533 (JP); Shimizu, Kazuhiro, Nihonmatsu-shi Fukushima 964-8533 (JP)

(57) **Abstract**

A gasket is provided which is improved in a shape stability of the gasket itself during usage while keeping a high sealing property. A gasket 10 provided for being sandwiched between a first housing 20 and a second housing 30, and having a main body portion thereof constituted of a steel plate, in which the first housing 20 has a surface thereof formed therein with a groove 21 which when being covered with the gasket, forms an area between a surface of the gasket 10 and an inner wall surface of the groove 21 for defining a passage permitting a fluid to flow. The gasket 10 includes a pair of a first convex portion 11 and a second convex portion 12 provided for coming in tight contact with the first housing 20 while extending along both edges of the groove 21, and a third convex portion 13 provided for coming in tight contact with the second housing 30 while extending along a position which faces a groove bottom of the groove 21.

## Description

### Background of the Invention

### Field of the Invention

The present invention relates to a gasket including a main body portion constituted of a steel plate.

### Description of the Related Art

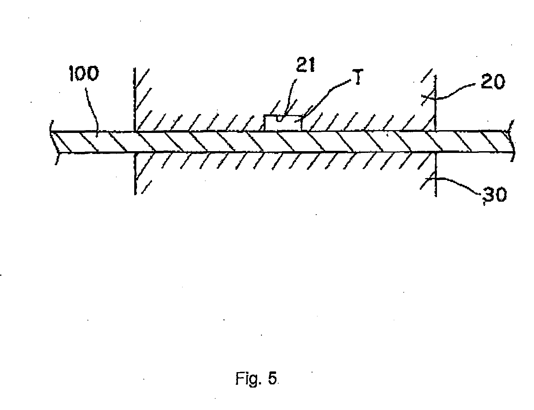

In the past, a technology is known in which a gasket is sandwiched between two members and a groove formed in a surface of one member is covered by the gasket so that an area formed between a surface of the gasket and an inner-wall surface of the groove defines a passage for permitting a fluid to flow therein. Such a technology will be described with reference to Fig. 5. Fig. 5 is a schematic sectional diagram showing a usage state of the gasket according to the first related art.

A gasket 100 according to the first related art includes a main body portion constituted of a steel plate with a flat-plate shape and a film coated on a surface thereof by adhering, the film being constituted of rubber material. The gasket 100 with the above-described configuration is used while being sandwiched between two members (hereinafter, referred to as a first housing 20 and a second housing 30 for the convenience of the description). Then, a groove 21 is formed in a surface of the first housing 20, and when the gasket 100 is sandwiched between the two members, the groove 21 is covered by the gasket 100, thereby being in a state where the groove 21 is covered by a cover.

Accordingly, an area formed between a surface of the gasket 100 and an inner-wall surface of the groove 21 defines a passage T for permitting a fluid to flow therein without a leakage.

However, when the gasket 100 is formed into a flat-plate shape like the first related art, a surface pressure of the gasket 100 with respect to the first housing 20 or a surface pressure thereof with respect to the second housing 30 in a state where the gasket 100 is sandwiched between the two members becomes uniform irrespective of a position thereof. For this reason, since a close-adhesion force of a contact surface between the gasket 100 and the first housing 20 becomes insufficient, a problem arises in that a fluid easily leaks from a gap therebetween.

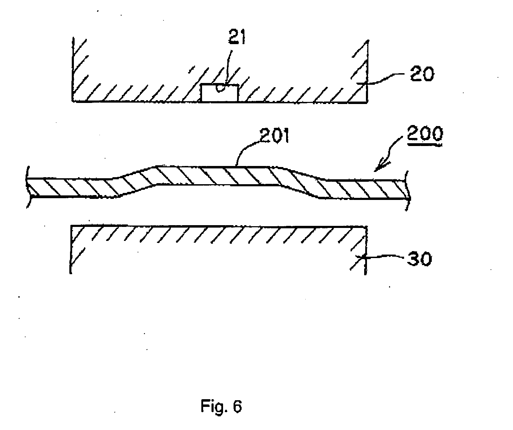

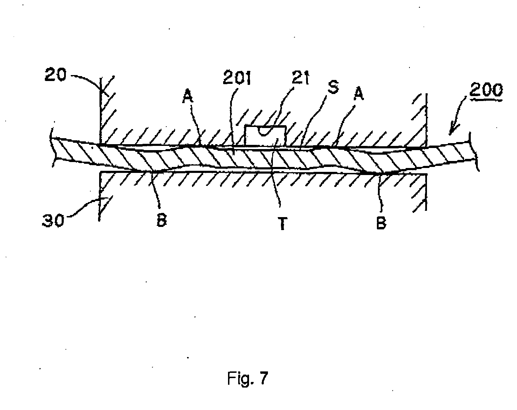

Therefore, a gasket for solving such a problem is shown in Figs. 6 and 7. Fig. 6 is a schematic sectional diagram showing a state before the gasket according to a second related art is sandwiched between two members. Fig. 7 is a schematic sectional diagram showing a usage state of the gasket according to the second related art.

A gasket 200 according to the second related art includes a main body portion constituted of a steel plate and a film coated on a surface thereof by adhering, the film being constituted of rubber material. Here, in case of the gasket 200 according to the second related art, there is provided a convex portion 201 extending along the groove 21 provided in the first housing 20 while being sandwiched between the two members.

According to the gasket 200 with the above-described configuration, when the gasket 200 is sandwiched between the two members, the convex portion 201 is pressed inward by the second housing 30. For this reason, the gasket 200 is elastically deformed so that a center portion of the convex portion 201 is bent toward the second housing 30 and an outside portion of the convex portion 201 is bent toward the first housing 20.

Accordingly, the gasket 200 comes into tight contact with the first housing 20 and the second housing 30 at two A-positions and two B-positions shown in Fig. 7 in a locally high-pressure state.

Likewise, in case of the gasket 200, since a surface pressure with respect to the first housing 20 is not uniform, the gasket 200 comes into tight contact with the first housing 20 while extending along both edges of the groove 21 in a locally high-pressure state. Accordingly, it is possible to more improve a sealing property than that of the first related art.

Here, a flow rate of a fluid flowing to the passage T defined by the surface of the gasket and the inner-wall surface of the groove 21 is influenced by the sectional area of the passage T. For this reason, in order to stabilize the flow rate at a desired flow rate, it is necessary to improve the precision of the sectional area of the passage T.

In case of the gasket 100 according to the first related art, since the gasket 100 comes into tight contact with the first housing 20 in a plan shape, the sectional area of the passage T is substantially the same as that of the groove 21, thereby easily improving the precision of the sectional area of the passage T.

Meanwhile, in case of the gasket 200 according to the second related art, as described above, the gasket 200 is elastically deformed so as to be bent in the vicinity of the groove 21. For this reason, the fluid flowing to the passage T enters a portion in the vicinity of both edges of the convex portion 201 (a portion in the vicinity of two A-positions shown in Fig. 7). Accordingly, the sectional area of the passage includes the sectional area of the groove and the sectional area of a gap S formed between the gasket 200 and the first housing 20. Then, the sectional area of the gap S is dependent on a deformation amount of the gasket 200. However, in general, it is difficult to stabilize the deformation amount of the elastic deformation. Particularly, it is necessary to increase an elastic repulsive force in order to improve a sealing property. However, when the elastic repulsive force is increased, the stabilization of the deformation amount becomes more difficult.

Likewise, the method in which the deformation amount of the elastic deformation of the gasket itself is suppressed in order to stabilize the flow rate of the fluid flowing to the passage T causes another technical difficulty.

Additionally, Patent Documents 1 and 2 disclose the related arts.
Japanese Patent Application Laid-Open No. 2002-250277
Japanese Patent Application Laid-Open No. H05-52108

### Summary of the Invention

An object of the invention is to provide a gasket improved in a shape stability of the gasket itself during usage while keeping a high sealing property. In order to solve the above-described problems, the invention adopts the following configuration.

According to an aspect of the invention, there is provided a gasket provided for being sandwiched between two members and including a main body portion thereof (a whole portion or a main portion of the gasket (for example, in case where only a surface is constituted of a film such as a rubber material)) constituted of a steel plate, in which one of the two members has a surface thereof formed therein with a groove which when being covered with the gasket forms an area between a surface of the gasket and an inner wall surface of the groove for defining a passage permitting a fluid to flow, wherein the gasket comprises: a pair of a first convex portion and a second convex portion provided for coming in tight contact with the said one member while extending along both edges of the groove; and a third convex portion provided for coming in tight contact with the other of the two members while extending along a position which faces a groove bottom of the groove.

According to the invention, when the gasket is sandwiched between two members, the first convex portion and the second convex portion come into tight contact with one member while extending along both edges of the groove provided in one of the two members. Accordingly, since the gasket comes into tight contact with the one member while extending along both edges of the groove in a locally high-pressure state, it is possible to improve a sealing property. Additionally, since the third convex portion comes into tight contact with the other member of the two members while extending along a position which faces the groove bottom of the groove, it is possible to stabilize the deformation amount caused by the elastic deformation of the gasket in the vicinity of the groove. Accordingly, it is possible to stabilize the sectional area of the passage in which the fluid flows, the passage being defined by the area formed between the surface of the gasket and the inner-wall surface of the groove.

As described above, the invention provides a gasket improved in a shape stability of the gasket itself during usage while keeping a high sealing property.

### Brief Description of the Drawings

Figs. 1A and 1B are explanatory diagrams showing an application example according to an embodiment of the invention.
Fig. 2 is a schematic sectional diagram showing a state before the gasket according to the embodiment is sandwiched between two members.
Fig. 3 is a schematic sectional diagram showing a usage state of the gasket according to the embodiment.
Fig. 4 is a schematic configuration diagram showing an apparatus used for an evaluation test.
Fig. 5 is a schematic sectional diagram showing a usage state of the gasket according to a first related art.
Fig. 6 is a schematic sectional diagram showing a state before the gasket according to a second related art is sandwiched between two members.
Fig. 7 is a schematic sectional diagram showing a usage state of the gasket according to the second related art.

### Description of the Preferred Embodiment

Hereinafter, a preferred embodiment of the invention will be exemplarily described in detail with reference to the accompanying drawings. Here, the scope of the invention is not limited by the dimension, material, shape, relative arrangement, and the like of the constituent described in this embodiment so long as a particular description is not made.

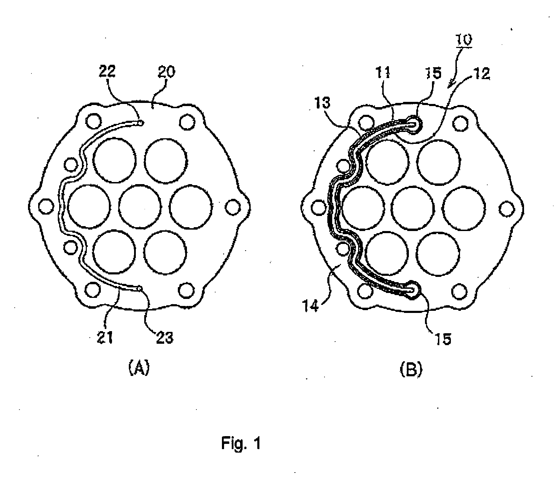

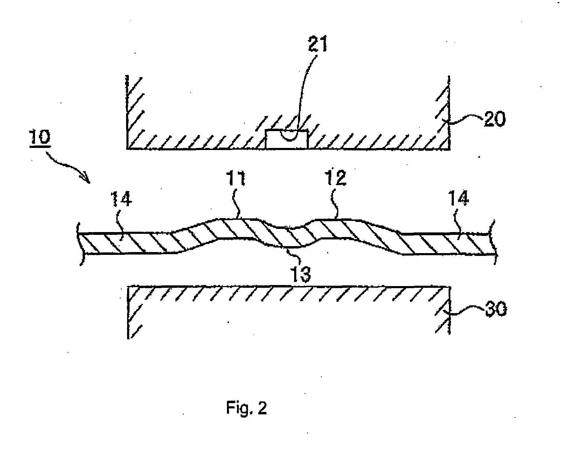

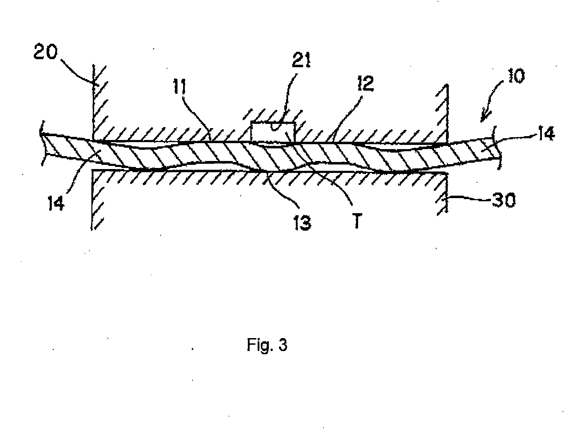

A gasket according to the embodiment of the invention will be described with reference to Figs. 1 to 3. Figs. 1A and 1B are explanatory diagrams showing an application example of the gasket according to the embodiment of the invention. Specifically, Fig. 1A is a top diagram showing a first housing corresponding to one of two members. Fig. 1B is a top diagram showing the gasket according to the embodiment of the invention. Fig. 2 is a schematic sectional diagram showing a state before the gasket according to the embodiment of the invention is sandwiched between the two members. Fig. 3 is a schematic sectional diagram showing a usage state of the gasket according the embodiment of the invention.

A gasket 10 according to the embodiment of the invention includes a main body portion constituted of a steel plate (for example, SUS301) and a film coated on a surface (both surfaces) thereof by adhering, the film being constituted of rubber material (for example, NBR).

Then, the gasket 10 is substantially formed into a flat-plate shape as a whole, but includes a pair of a first convex portion 11 and a second convex portion 12 protruding from one surface and a third convex portion 13 provided between the first convex portion 11 and the second convex portion 12 while protruding from the other surface. An outside portion of the first convex portion 11 and the second convex portion 12 is formed into a flat-plate shape. Hereinafter, for the convenience of the description, the flat-plate portion will be referred to as a flat-plate portion 14.

When an external force does not act on the gasket 10, the first convex portion 11 and the second convex portion 12 are configured to more protrude toward the one surface than the flat-plate portion 14. Additionally, when an external force does not act on the gasket 10, the other surface of the third convex portion 13 is configured to be more deviated to one surface than the other surface of the flat-plate portion 14.

When the gasket 10 with the above-described configuration is sandwiched between two members as a first housing 20 and a second housing 30, a groove 21 formed in a surface of the first housing 20 is covered by the gasket 10, thereby being in a state where the groove 21 is covered by a cover. Accordingly, an area formed between a surface of the gasket 10 and an inner-wall surface of the groove 21 defines a passage T for permitting a fluid to flow therein without a leakage.

Fig. 1 shows an example of the first housing 20. The first housing 20 is provided with two flow-passage holes communicating the inside of the housing to the surface thereof, where an opening portion of one flow-passage hole is used as an inlet 22 and an opening portion of the other flow-passage hole is used as an outlet 23. Then, the groove 21 connects the inlet 22 to the outlet 23.

When the gasket 10 is sandwiched between the first housing 20 and the second housing 30, the first convex portion 11 and the second convex portion 12 provided in the gasket 10 come into tight contact with the first housing 20 while extending along both edges of the groove 21. The third convex portion 13 provided in the gasket 10 comes into tight contact with the second housing 30 while extending along a position which faces a groove bottom of the groove 21.

Here, in order to allow the gasket 10 to be sandwiched between the first housing 20 and the second housing 30, first, the front end portions of the first convex portion 11 and the second convex portion 12 and the other surface of the flat-plate portion 14 come into tight contact with the first housing 20 and the second housing 30, respectively. Then, the first convex portion 11 and the second convex portion 12 are pressed inward by the first housing 20 so that a center portion between the first convex portion 11 and the second convex portion 12 is elastically deformed so as to be bent toward the second housing 30. At this time, the outside portion of the flat-plate portion 14 located in the outside of the first convex portion 11 and the second convex portion 12 is elastically deformed so as to be bent toward the first housing 20. When the deformation is progressed to a certain extent, the third convex portion 13 comes into tight contact with the second housing 30.

According to the gasket 10 according to the embodiment, when the gasket 10 is sandwiched between the first housing 20 and the second housing 30, the first convex portion 11 and the second convex portion 12 provided in the gasket 10 come into tight contact with the first housing 20 while extending along both edges of the groove 21. Accordingly, since the gasket 10 comes into tight contact with the first housing 20 while extending along both edges of the groove 21 in a locally high-pressure state, it is possible to improve a sealing property.

Additionally, in this embodiment, a fourth convex portion 15 is provided in the inlet 22 and the outlet 23 while surrounding them and connecting the first convex portion 11 to the second convex portion 12. Accordingly, even in the inlet 22 and the outlet 23, it is possible to improve a sealing property.

Then, since the third convex portion 13 of the gasket 10 comes into tight contact with the second housing 30 while extending along the position facing the groove bottom of the groove 21, it is possible to stabilize a deformation amount caused by the elastic deformation of the gasket 10 in the vicinity of the groove 21. Accordingly, it is possible to stabilize a sectional area of the passage T defined by the area formed between the surface of the gasket 10 and the inner-wall surface of the groove 21. As a result, it is possible to stabilize a flow rate of the fluid flowing to the passage T at a desired flow rate.

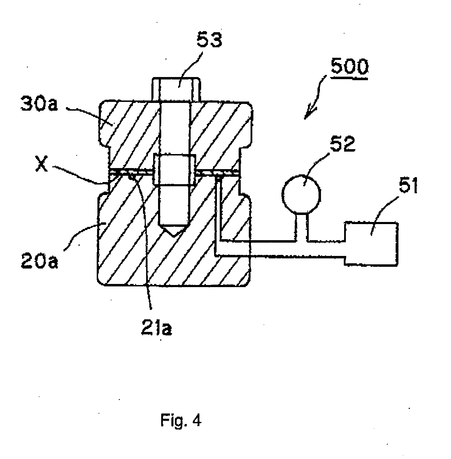

Here, there is shown an evaluation-test result obtained by comparing the gasket 10 according to this embodiment, the gasket 100 according to the first related art, and the gasket 200 according to the second related art with one another. Fig. 4 is a schematic configuration diagram showing an apparatus used for the evaluation test.

An apparatus 500 used for the evaluation test includes a lower jig 20a and an upper jig 30a configured to be fastened to each other in terms of a bolt 53. The lower jig 20a corresponds to the first housing 20 and has a groove 21 a formed in a surface opposed to the upper jig 30a. The upper jig 30a corresponds to the second housing 30.

Then, the lower jig 20a and the upper jig 30a are configured to sandwich a gasket X as a test object therebetween. A pump 51 is configured to feed a predetermined-pressure fluid to a passage defined by an area formed between a surface of the gasket X and an inner-wall surface of the groove 21. In the drawings, Reference numeral 52 denotes a pressure gauge for measuring a fluid pressure-fed by the pump 51.

Here, as a material of the gasket as the test object in the evaluation test, a steel plate constituting a main body portion is SUS301 and a rubber material coated on both surfaces is NBR. A plate thickness of the gasket is set to 4 mm (tolerance of 0.04 mm), and a section of the groove 21 a is formed into a rectangular shape so as to have a transverse width of 0.9 mm. In the gasket 10 according to the invention, a protruding amount of the first convex portion 11 and the second convex portion 12 is set to 0.2 mm, and a protruding amount of the third convex portion 13 is set to be in the range of 0.15 to 0.2 mm. As a fluid flowing to the passage, refrigerant oil is used, and the oil is pressure-fed by the pump 51 at a hydraulic pressure of 0.5 Mpa.

As a result, in case of the gasket 10 according to the invention, it is observed that a sealing property is stable. Additionally, it is observed that a range of the oil adhered to the gasket is 0.9 mm corresponding to the groove width of the groove 21 a, the oil is not absorbed to a gap between the first convex portion 11 and the lower jig 20a or a gap between the second convex portion 12 and the lower jig 20a, and the sectional area of the passage is stable.

On the contrary, unlike the gasket 10 according to this embodiment, in case of the gasket 100 according to the first related art, it is observed that a seal limit pressure is lower than that of the gasket 10 according to this embodiment.

In case of the gasket 200 according to the second related art, it is observed that a range of the oil adhered to the gasket is larger than 0.9 mm corresponding to the groove width and the oil is absorbed to a portion in the vicinity of both ends of the convex portion 201 in a width direction. Accordingly, it is observed that the sectional area of the passage is not stable and the stabilization of the flow rate of the oil is difficult.

## Claims

1. A gasket provided for being sandwiched between two members and including a main body portion thereof constituted of a steel plate, in which one of the two members has a surface thereof formed therein with a groove (21) which when being covered with the gasket (10) forms an area between a surface of the gasket and an inner wall surface of the groove for defining a passage permitting a fluid to flow, wherein the gasket (10) comprises: a pair of a first convex portion (11) and a second convex (12) portion provided for coming in tight contact with the said one member while extending along both edges of the groove (21) and a third convex (13) portion provided for coming in tight contact with the other of the two members while extending along a position which faces a groove bottom of the groove (21).

2. Gasket according to claim 1, **characterized in that** the steel plate is film coated, especially the film being constituted of rubber.

3. Gasket according to claim 1 or 2, **characterized in that** a fourth convex portion (15) is provided, surrounding the inlet (22) and/or the outlet (23).

4. Gasket according to any of the claims 1 to 3, **characterized in that** the first convex portion (11) and the second convex portion (12) protrude from one surface.

5. Gasket according to claim 4, **characterized in that** when an external force does not act on the gasket (10), the first convex portion (11) and the second convex, portion (12) are configured to more protrude toward the one surface than a flat-plate portion 14 of the gasket.

6. Sealing arrangement, comprising a first member, a second member and a gasket (10) according to any of the claims 1 to 5, sandwiched between the two members.

7. Sealing arrangement according to claim 6, **characterized in that** a groove (21) is formed in a surface of the first member being covered by the gasket (10).

8. Sealing arrangement according to claim 6 or 7, **characterized in that** the first convex portion (11) and the second convex (12) portion come in tight contact with the said one member while extending along both edges of the groove (21) and the third convex (13) portion comes in tight contact with the other of the two members while extending along a position which faces a groove bottom of the groove (21).

9. Sealing arrangement according to any of the claims 6 to 8, **characterized in that** a flat-plate portion (14) of the gasket (10) comes into tight contact with the first member and the seond member respectively.

10. Sealing arrangement according to any of the claims 6 to 9, **characterized in that** the first convex portion (11) and the second convex portion (12) are pressed inward by the first member so that a center portion between the first convex portion (11) and the second convex portion (12) is elastically deformed so as to be bent toward the second member.

11. Sealing arrangement according to any of the claims 6 to 10, **characterized in that** an area formed between a surface of the gasket (10) and an inner-wall surface of the groove (21) defines a passage T for permitting a fluid to flow therin without leakage.

12. Sealing arrangement according to any of the claims 6 to 11, **characterized in that** the first member is provided with two flow-passage holes communicating the inside of the first member to the surface therof, wherein an opening portion of one flow-passage hole is used as an inlet (22) and an opening portion of the other flow-passage hole is used as an outlet (23), wherein the groove (21) is connecting the inlet (22) and the outlet (23).

13. Sealing arrangement according to any of the claims 6 to 12, **characterized in that** the third convex portion (13) of the gasket (10) comes into tight contact with the second member while extending along a position facing the groove bottom of the groove (21).
